# EUROPÄISCHE PATENTSCHRIFT

(11) **EP 4 074 989 B1**
(45) Veröffentlichungstag und Bekanntmachung des Hinweises auf die Patenterteilung: **24.07.2024**
(21) Anmeldenummer: 22162866.2
(22) Anmeldetag: 18.03.2022
(51) Int. Cl.: F16B 5/06, F16B 7/04, F16B 37/04, F16L 3/10, F16B 5/02

(54) **BEFESTIGER FÜR EINE SCHRAUBBEFESTIGUNG AN EINER MONTAGESCHIENE UND BEFESTIGUNGSANORDNUNG MIT EINEM SOLCHEN BEFESTIGER**
FASTENER FOR A SCREW FASTENING ON A MOUNTING RAIL AND FASTENING ASSEMBLY COMPRISING SUCH A FASTENER
DISPOSITIF DE FIXATION POUR UNE FIXATION PAR VIS À UN RAIL DE MONTAGE ET AGENCEMENT DE FIXATION DOTÉ D'UN TEL DISPOSITIF DE FIXATION

(30) Priorität: 13.04.2021 DE 102021109165
(43) Veröffentlichungstag der Anmeldung: 19.10.2022
(73) Patentinhaber: fischerwerke GmbH & Co. KG, 72178 Waldachtal (DE)
(72) Erfinder: Dengler, Peter, 72202 Nagold (DE); Förmer, Thomas, 72401 Haigerloch-Gruol (DE)
(74) Vertreter: Suchy, Ulrich Johannes

(56) Entgegenhaltungen:
- EP-A2- 2 175 148
- EP-B1- 0 389 309
- DE-A1- 102017 116 856
- DE-A1- 4 243 185
- DE-U1- 202009 016 565
- FR-A1- 2 665 229

## Beschreibung

Die Erfindung betrifft einen Befestiger für eine Schraubbefestigung an einer Montageschiene mit den Merkmalen des Oberbegriffs des Anspruchs 1 und eine Befestigungsanordnung mit einem solchen Befestiger mit den Merkmalen des Oberbegriffs des Anspruchs 8.

Montageschienen werden typischerweise an Decken, Wänden oder Pfosten von Gebäuden und Bauwerken befestigt und dienen zur Befestigung von beispielsweise Rohrschellen oder Kabelschellen unter einer Decke, an einer Wand oder einem Pfosten. Eine Befestigung der Schellen an den Montageschienen erfolgt vielfach mit Hammerkopfschrauben oder Rechteckmuttern, die so in die Montageschienen eingebracht werden, dass ein Schraubenschaft oder eine Gewindestange zu einer Befestigung beispielsweise einer Rohrschelle aus der Montageschiene vorsteht.

Die Offenlegungsschrift DE 42 43 185 A1 offenbart einen mehrteiligen Befestiger für eine Schraubbefestigung beispielsweise einer Gewindestange an einer Montageschiene. Der bekannte Befestiger weist eine in Draufsicht quadratische Lochscheibe als Auflager, eine in Draufsicht längliche Mutter und einen Halter aus Kunststoff auf, der das Auflager und die Mutter elastisch verbindet und mit einem Mutterngewinde gleichachsig zu einem Mittelloch des Auflagers hält. Wenn die Mutter in eine Montageschiene eingesetzt ist, spannt der Halter die Mutter von innen und das Auflager von außen gegen die Montageschiene, so dass der Befestiger an der Montageschiene gehalten ist.

Aufgabe der Erfindung ist, einen gegen unbeabsichtigtes Verschieben in einer Längsrichtung einer Montageschiene gesicherten Befestiger vorzuschlagen, der sich trotzdem leichtgängig verschieben lässt.

Diese Aufgabe wird erfindungsgemäß durch die Merkmale des Anspruchs 1 gelöst. Der erfindungsgemäße Befestiger für eine Schraubbefestigung an einer Montageschiene weist ein Auflager, das zu einer Anlage außen an der Montageschiene vorgesehen ist, ein Hammerkopfelement, das zu einer Anlage innen an der Montageschiene vorgesehen ist, und einen Halter, der das Hammerkopfelement abstandsveränderlich mit dem Auflager verbindet, auf. Der Halter ist mit dem Auflager verbunden und das Hammerkopfelement ist im Halter verschieblich angeordnet und kann in Richtung des Auflagers und in die entgegengesetzte Richtung, also weg vom Auflager, verschoben werden. Der Halter bildet sozusagen eine Art Käfig für das Hammerkopfelement und ist insbesondere aus einem Kunststoff gefertigt, insbesondere einstückig gespritzt. Durch die Ausgestaltung des Halters ist die maximale Abstandsveränderlichkeit des Hammerkopfelements bezüglich des Auflagers festgelegt.

Das Auflager ist beispielsweise eine Lochscheibe und ist allgemein ein Element mit einem Durchgangsloch, das außen an einer Montageschiene anliegt, wenn der Befestiger in vorgesehener Weise an der Montageschiene angeordnet ist. "In vorgesehener Weise" bedeutet, dass sich das Hammerkopfelement in der Montageschiene befindet und die Montageschiene von innen hintergreift. Das Durchgangsloch des Auflagers ist zu einer Durchführung beispielsweise einer Gewindestange, die in ein Innengewinde des Hammerkopfelements schraubbar ist, oder eines Schraubenschafts, der von dem Hammerkopfelement absteht, vorgesehen.

Das Hammerkopfelement ist allgemein ein Element, das schmaler ist als ein Langloch oder ein Längsschlitz der Montageschiene breit ist, so dass es in Längsrichtung des Langlochs oder Längsschlitzes ausgerichtet durch das Langloch oder den Längsschlitz in die Montageschiene einbringbar ist, und das länger als das Langloch oder der Längsschlitz der Montageschiene breit ist, so dass das Hammerkopfelement die Montageschiene seitlich des Langlochs oder Längsschlitzes von innen hintergreift, wenn das Hammerkopfelement in der Montageschiene quer oder schräg gestellt ist beziehungsweise wird. Dabei genügt grundsätzlich, wenn eine längste Abmessung des Hammerkopfelements radial zu einer Achse eines Befestigungsgewindes des Hammerkopfelements größer als das Langloch oder der Längsschlitz der Montageschiene breit ist.

Das Befestigungsgewinde des Hammerkopfelements ist ein Innengewinde zu einem Einschrauben beispielsweise einer Gewindestange oder ein Außengewinde eines Schraubenschafts des Hammerkopfelements. Ein Gewindeaußendurchmesser, das heißt ein größter Durchmesser des Befestigungsgewindes des Hammerkopfelements, ist nicht größer als ein Durchmesser des Durchgangslochs des Auflagers, so dass eine Gewindestange durch das Durchgangsloch des Auflagers durchführbar und in das Befestigungsgewinde des Hammerkopfelements, das in diesem Fall ein Innengewinde ist, schraubbar ist, oder dass der Schraubenschaft des Hammerkopfelements durch das Durchgangsloch des Auflagers durchtreten kann.

Der Halter des erfindungsgemäßen Befestigers verbindet, wie bereits beschrieben, das Hammerkopfelement abstandsveränderlich und so mit dem Auflager, dass das Befestigungsgewinde des Hammerkopfelements gleichachsig oder koaxial zu dem Durchgangsloch des Auflagers ist. Eine genaue Gleichachsigkeit ist nicht notwendig, das Durchgangsloch und das Befestigungsgewinde können einen Versatz zueinander aufweisen, solange dieser den Durchtritt der Gewindestange oder des Schraubenschafts nicht behindert oder jedenfalls nicht ausschließt. Es genügt also, wenn axial zum Befestigungsgewinde gesehen das Durchgangsloch das Befestigungsgewinde überdeckt.

Der Halter weist erfindungsgemäß zwei Raststellungen für das Hammerkopfelement auf, er hält das Hammerkopfelement in einer ersten Raststellung in einer dem Auflager nahen Stellung und in einer zweiten Raststellung in einer dem Auflager fernen Stellung. Die Raststellungen können auch als Schnappstellungen aufgefasst werden. In der ersten Raststellung ist das Hammerkopfelement dem Auflager so nahe, dass der erfindungsgemäße Befestiger an der Montageschiene klemmt oder zumindest an dieser anliegt, wenn das Hammerkopfelement die Montageschiene von innen hintergreift und das Auflager außen an der Montageschiene anliegt. Eine Klemmkraft zwischen dem Befestiger und der Montageschiene kann so groß sein, dass sich der Befestiger nicht verschieben lässt, wobei ein Halt des Befestigers gegen Verschieben durch eine Verzahnung vergrößert sein kann. Die Klemmkraft kann auch so gewählt sein, dass sich der Befestiger zwar nicht unabsichtlich und insbesondere nicht durch Schwerkraft entlang einer vertikal angeordneten Montageschiene verschiebt, aber sich zu einer Positionierung gewollt in einer Längsrichtung der Montageschiene verschieben lässt. Eine Klemmkraft zwischen dem Befestiger und der Montageschiene in der ersten Raststellung ist insbesondere dann nicht notwendig, wenn der Befestiger und die Montageschiene in der ersten Raststellung formschlüssig zusammenwirken, wodurch ebenfalls ein unbeabsichtigtes Verschieben vermieden werden kann. Es kann jedoch zusätzlich oder alternativ auch eine Klemmkraft ausgeübt werden. In der zweiten Raststellung klemmt der Befestiger nicht an der Montageschiene und lässt sich dadurch leichtgängig in der Längsrichtung der Montageschiene verschieben. Außerdem ermöglicht die zweite Raststellung ein Drehen des Hammerkopfelements um die Achse seines Befestigungsgewindes, wenn sich das Hammerkopfelement in und das Auflager in Anlage außen an der Montageschiene befinden, um das Hammerkopfelement nach einem Einbringen in die Montageschiene in der Montageschiene schräg oder quer stellen zu können, so dass das Hammerkopfelement die Montageschiene von innen hintergreift. Das Hammerkopfelement ist von der zweiten, dem Auflager fernen Raststellung in die erste, dem Auflager nahe Raststellung überführbar. Eine entgegengesetzte Überführung des Hammerkopfelements von der ersten in die zweite Raststellung ist an sich möglich, kann bei Ausführungen der Erfindung allerdings auch konstruktiv ausgeschlossen oder zumindest erschwert sein. Insbesondere wird eine Gewindestange durch das Durchgangsloch des Auflagers durchgeführt und in das Befestigungsgewinde des Hammerkopfelements eingeschraubt. Um das Hammerkopfelement von der zweiten in die erste Rastposition zu bringen, muss nun lediglich an der Gewindestange in axialer Richtung weg von der Montageschiene gezogen werden, wodurch das Hammerkopfelement von der zweiten Rastposition in die erste Rastposition gezogen wird. Um das Hammerkopfelement von der ersten in die zweite Rastposition zu bringen, muss lediglich die Gewindestange in entgegengesetzte Richtung bewegt, also in Richtung der Montageschiene gedrückt werden. Eine Einschraubtiefe der Gewindestange ist nicht durch den Halter limitiert. Die Gewindestange kann folglich bei Bedarf komplett durch das Hammerkopfelement und derart weit in den Halter eingeschraubt werden, dass ein Ende der Gewindestange aus dem Halter hervortritt. Im Extremfall ist die Einschraubtiefe der Gewindestange lediglich durch die Dimensionierung der Montageschiene limitiert. Im Extremfall liegt also das Ende der Gewindestange, welches durch das Hammerkopfelement hindurchgeschraubt wurde, an einem Grund der Montageschiene an. Ein Vorteil, dass die Einschraubtiefe der Gewindestange nicht von dem Halter limitiert wird, ist der, dass eine an der Gewindestange befestigte Rohrschelle leicht höhenjustiert, also ein Abstand zwischen Rohrschelle und Montageschiene in einem relativ großen Bereich eingestellt werden kann.

In bevorzugter Ausgestaltung der Erfindung verbindet der Halter das Hammerkopfelement drehfest mit dem Auflager, so dass sich das Hammerkopfelement in der Montageschiene mit dem Auflager drehen lässt, das sich außen an der Montageschiene befindet. Somit ist durch die Drehung des Auflagers eine Drehung des Hammerkopfelements möglich.

Eine Ausgestaltung der Erfindung sieht vor, dass der Halter einen Haltearm auf einer Seite des Hammerkopfelements aufweist, der an dem Auflager festgelegt ist. Der Haltearm verhindert ein Drehen des Hammerkopfelements gegenüber dem Auflager oder begrenzt jedenfalls einen Drehwinkel, um den das Hammerkopfelement gegenüber dem Auflager drehbar ist. In einem Abstand in axialer Richtung des Befestigungsgewindes des Hammerkopfelements weist der Haltearm ein Widerlager auf einer dem Auflager abgewandten Seite des Hammerkopfelements auf, das einen maximalen Abstand des Hammerkopfelements von dem Auflager begrenzt. Das Widerlager weist insbesondere einen Durchgang in Form eines Mittellochs auf. Dieses ist insbesondere derart deckungsgleich mit dem Durchgangsloch des Auflagers und dem Befestigungsgewinde des Hammerkopfelements angeordnet, sodass eine Gewindestange, wie oben beschrieben, durch den Halter hindurchgeschraubt werden kann.

Eine erfindungsgemäße Weiterbildung sieht zwei Haltearme beiderseits des Hammerkopfelements vor, die auf der dem Auflager abgewandten Seite des Hammerkopfelements durch das Widerlager verbunden sind. Diese Ausgestaltung der Erfindung ermöglicht eine symmetrische und stabile Verbindung des Widerlagers mit dem Auflager. Die Haltearme halten das Hammerkopfelement drehfest zwischen sich und somit drehfest zum Auflager. Zudem bilden die zwei Haltearme eine stabile Gleitführung für das Hammerkopfelement, wodurch das Hammerkopfelement zwischen dem Widerlager und dem Auflager, respektive zwischen der ersten und der zweiten Rastposition gleiten kann. Durch das Auflager, die beiden Haltearme und durch das Widerlager ist ein Käfig oder eine Art Umhausung für das Hammerkopfelement gebildet.

Eine erfindungsgemäße Weiterbildung sieht vor, dass das Widerlager des Halters radial zu der Achse des Befestigungsgewindes des Hammerkopfelements federnde Federarme, insbesondere mit Rastnasen, aufweist, die sich von dem Widerlager in Richtung des Auflagers erstrecken und an oder auf denen das Hammerkopfelement in der ersten Raststellung aufliegt. Insbesondere liegt in der ersten Raststellung das Hammerkopfelement auf den Rastnasen auf und wird durch diese in Wirkkontakt mit der Öffnung der Montageschiene gehalten. In der zweiten Raststellung wird das Hammerkopfelement insbesondere durch die Rastnasen am Widerlager gehalten. Die Federarme fungieren, insbesondere in Zusammenspiel mit den Rastnasen, somit als eine Art Rastmechanismus. Insbesondere halten die Federarme das Hammerkopfelement in der zweiten Raststellung an oder zumindest nahe am Widerlager, wodurch das Hammerkopfelement stabil im Halter gehalten und vor Herausfallen gesichert ist.

Bezüglich der Achse des Befestigungsgewindes sind die Haltearme und die Federarme insbesondere jeweils um 90° zueinander versetzt.

Die erfindungsgemäße Befestigungsanordnung mit den Merkmalen des Anspruchs 8 weist eine Montageschiene und den vorstehend erläuterten Befestiger auf. Die Montageschiene ist beispielsweise ein Rohr oder ein Hohlprofil mit insbesondere quadratischem oder rechteckigem Querschnitt und einem in einer Längsrichtung der Montageschiene durchgehenden Längsschlitz oder einem Langloch, durch den oder das das Hammerkopfelement des Befestigers in die Montageschiene einbringbar ist. Dazu ist der Längsschlitz oder das Langloch mindestens so breit wie das Hammerkopfelement breit ist, so dass das Hammerkopfelement in einer Längsrichtung des Längsschlitzes oder des Langlochs ausgerichtet in die Montageschiene einbringbar ist, bis das Auflager außen an der Montageschiene anliegt. Der Längsschlitz oder das Langloch ist schmaler als das Hammerkopfelement des Befestigers lang ist, wobei die Länge des Hammerkopfelements dessen größte Erstreckung radial zur Achse seines Befestigungsgewindes ist. Das Hammerkopfelement lässt sich in Hintergriff in der Montageschiene bringen, indem es in der Montageschiene um beispielsweise bis zu 90° gedreht wird. Insbesondere wird hierbei das Auflager gegriffen und um bis zu 90° gedreht, was zu einer Verdrehung des Hammerkopfelements führt. Danach lässt sich das Hammerkopfelement nicht mehr in Richtung der Achse seines Befestigungsgewindes aus der Montageschiene herausziehen und es lässt sich, wie bereits beschrieben, beispielsweise eine Gewindestange zur Befestigung an der Montageschiene in das Befestigungsgewinde des Hammerkopfelements, das in diesem Fall ein Innengewinde ist, schrauben oder ein Gewindeschaft des Hammerkopfelements steht durch den Längsschlitz oder das Langloch aus der Montageschiene heraus. Der Längsschlitz oder das Langloch der Montageschiene wird hier allgemein auch als Öffnung der Montageschiene bezeichnet, durch die das Hammerkopfelement in die Montageschiene einbringbar ist, derart, dass das Auflager des Befestigungselements außen an der Montageschiene anliegt. Insbesondere weist die Montageschiene mehrere identische Langlöcher für jeweils einen erfindungsgemäßen Befestiger auf. Der Begriff "Langloch" ist hierbei jedoch nicht geometrisch exakt auszulegen. Als Langloch ist eine Öffnung zu verstehen, deren Länge größer als deren Breite ist. Zudem können die Öffnungen der Montageschiene auch eine mit dem erfindungsgemäßen Befestiger korrespondierende Rechteckform aufweisen.

Eine Ausgestaltung der Erfindung sieht vor, dass der Befestiger ein Hintergriffelement aufweist, das in Hintergriff an der Montageschiene bringbar ist derart, dass das Auflager außen an der Montageschiene anliegt und festgelegt ist. Dadurch lässt sich der Befestiger definiert an der Montageschiene anordnen, wenn sich das Hammerkopfelement in der zweiten Raststellung befindet, in der es den Befestiger nicht an der Montageschiene festklemmt, respektive in der der Befestiger nicht an der Montageschiene anliegt.

Um das Hammerkopfelement drehfest in der Montageschiene festzulegen, weist das Hammerkopfelement bei einer Ausgestaltung der Erfindung eine Tangentialfläche in einer Tangentialebene zu der Achse des Befestigungsgewindes auf einer dem Auflager zugewandten Seite auf. Der Abstand der Tangentialfläche von der Achse des Befestigungsgewindes ist nicht größer als die Hälfte der Breite der Öffnung, insbesondere also des Längsschlitzes oder des Langlochs der Montageschiene. Die Tangentialfläche hält das Hammerkopfelement durch Anlage an einem Rand der Öffnung der Montageschiene drehfest oder begrenzt jedenfalls einen Drehwinkel des Hammerkopfelements, wenn das Hammerkopfelement dem Auflager nahe ist und sich die Tangentialfläche in der Öffnung der Montageschiene befindet. Anstelle einer Tangentialfläche kann das Hammerkopfelement auch zwei einander abgewandte Parallelflächen in zueinander und zu der Achse des Befestigungsgewindes parallelen Ebenen aufweisen, deren Abstand voneinander nicht größer als die Breite der Öffnung der Montageschiene ist. Die zwei einander abgewandten Parallelflächen des Hammerkopfelements bilden in der ersten Raststellung eine formschlüssige Verbindung mit der Öffnung der Montageschiene aus, wodurch das Hammerkopfelement in der ersten Raststellung stabil gegen Verdrehen gesichert ist.

Wie bereits oben beschrieben, wird eine Gewindestange in das Hammerkopfelement eingeschraubt, nachdem dieses in die Montageschiene eingebracht worden ist. Durch Ziehen an der Gewindestange in axialer Richtung weg von der Montageschiene geht das Hammerkopfelement von der zweiten Raststellung in die erste Raststellung über. Nach einer eventuellen Höhenjustierung, wie bereits beschrieben, kann eine Mutter derart auf die Gewindestange aufgedreht werden, dass der Befestiger endfest an der Montageschiene festgelegt ist. Hierbei ist die Mutter in Kontakt mit dem Auflager und der Befestiger ist kraftschlüssig und endfest mit der Montageschiene verbunden.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar, sofern sie unter den Wortlaut der beigefügten Ansprüche fallen.

Die Erfindung wird nachfolgend anhand eines in der Zeichnung dargestellten Ausführungsbeispiels näher erläutert. Es zeigen:
- Figur 1: eine perspektivische Explosionsdarstellung eines erfindungsgemäßen Befestigers;
- Figur 2: den Befestiger aus Figur 1 in zusammengebautem Zustand in einer zweiten Raststellung;
- Figur 3: den Befestiger aus Figuren 1 und 2 in zusammengebautem Zustand in einer ersten Raststellung; und
- Figur 4: eine erfindungsgemäße Befestigungsanordnung mit dem Befestiger aus Figur 3 in einer perspektivischen Darstellung.

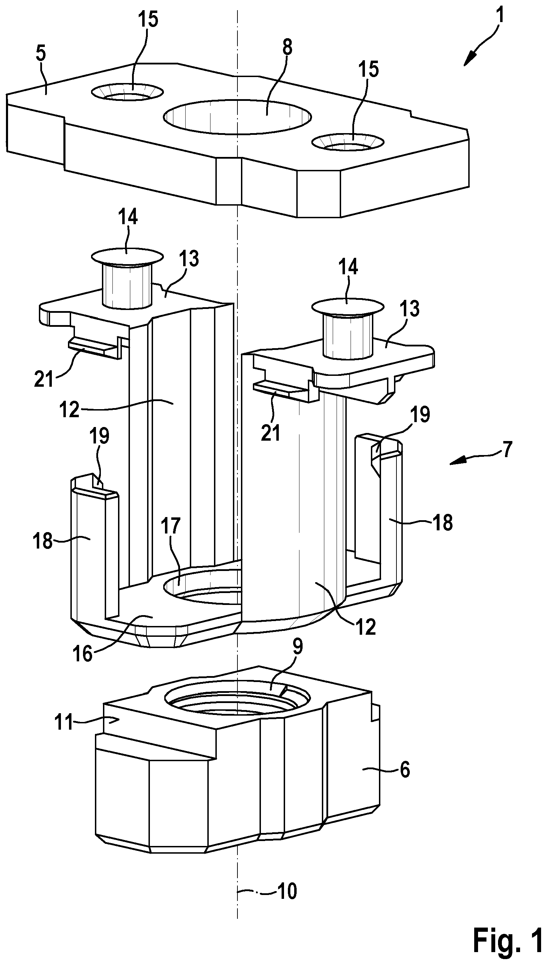

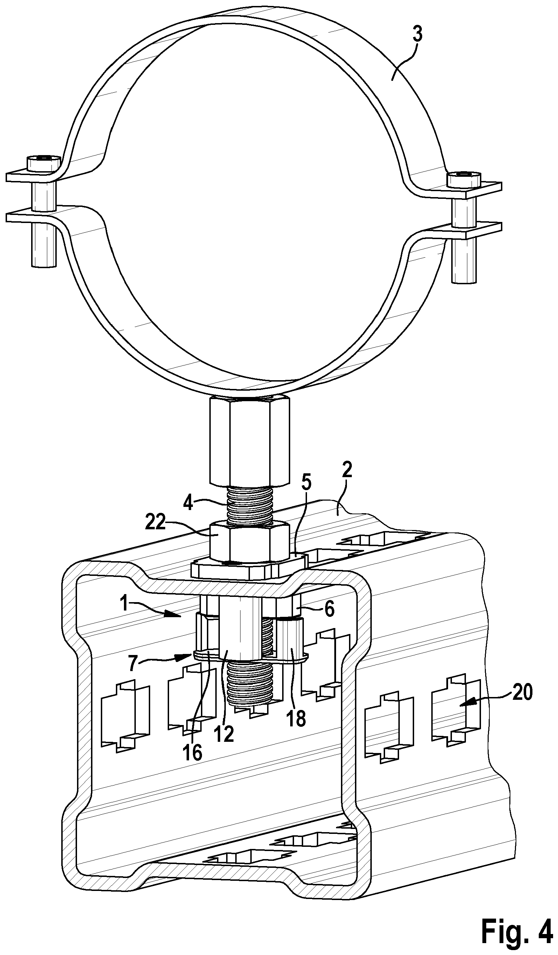

Der in Figuren 1 bis 3 dargestellte, erfindungsgemäße Befestiger 1 ist für eine Schraubbefestigung an einer Montageschiene 2 vorgesehen, wie sie Figur 4 zeigt. "Schraubbefestigung" meint eine Befestigung eines Gegenstands wie beispielsweise einer Rohrschelle 3 mithilfe beispielsweise einer Gewindestange 4 oder einem anderen Schraubelement mithilfe des Befestigers 1 an der Montageschiene 2.

Der erfindungsgemäße Befestiger 1 weist ein Auflager 5, ein Hammerkopfelement 6 und einen Halter 7 auf, der das Hammerkopfelement 6 abstandsveränderlich mit dem Auflager 5 verbindet. Das Hammerkopfelement 6 ist im Halter 7 verschieblich.

Das Auflager 5 ist im Ausführungsbeispiel eine näherungsweise rechteckige Platte mit einem Durchgangsloch 8 in ihrer Mitte.

Das Hammerkopfelement 6 ist im Ausführungsbeispiel eine Spezialmutter, die auch als Hammerkopfmutter oder als Nutenstein bezeichnet werden kann. Sie weist ebenfalls ein Durchgangsloch mit einem Innengewinde in ihrer Mitte auf, wobei das Innengewinde ein Befestigungsgewinde 9 des Hammerkopfelements 6 und zugleich des Befestigers 1 insgesamt bildet. Ein Gewindeaußendurchmesser, das heißt ein größter Durchmesser des im Ausführungsbeispiel als Innengewinde ausgeführten Befestigungsgewindes 9 ist nicht größer und im Ausführungsbeispiel etwas kleiner als ein Durchmesser des Durchgangslochs 8 im Auflager 5, so dass die Gewindestange 4 oder ein anderes Schraubelement durch das Durchgangsloch 8 im Auflager 5 durchgeführt und in das Befestigungsgewinde 9 des Hammerkopfelements 6 geschraubt werden kann. Möglich ist beispielsweise auch eine Ausführung des Hammerkopfelements 6 als Hammerkopfschraube mit einem Schraubenschaft, der ein Schraubengewinde, das heißt ein Außengewinde, als Befestigungsgewinde aufweist (nicht dargestellt).

Axial zum Befestigungsgewinde 9 gesehen weist das Hammerkopfelement 6 näherungsweise die Form eines länglichen Achtecks auf, das beispielsweise etwa doppelt so lang wie breit ist. Das Hammerkopfelement 6 weist zwei zueinander parallele lange Seiten und zwei kurze Querseiten sowie Schrägseiten, die die langen Seiten und die Querseiten verbinden, auf. Andere Formen des Hammerkopfelements 6 sind möglich.

Auf einer Stirnseite, die in zusammengebautem Zustand dem Auflager 5 zugewandt ist, weist das Hammerkopfelement 6 eine podestartige Erhebung auf, die zwei einander abgewandte Parallelflächen 11 in zwei zueinander parallelen Tangentialflächen zu der Achse 10 des Befestigungsgewindes 9 quer zu den beiden langen Seiten des Hammerkopfelements 6 und in gleichem radialem Abstand von der Achse 10 des Befestigungsgewindes 9 aufweist.

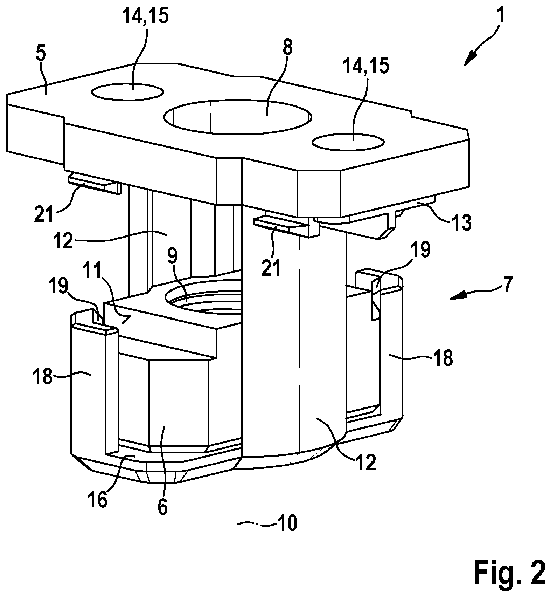

Der Halter 7 ist im Ausführungsbeispiel ein Kunststoffteil mit zwei streifenförmigen Haltearmen 12, die sich bei zusammengebautem Befestiger 1 parallel zur Achse 10 des Befestigungsgewindes 9 von einer dem Hammerkopfelement 6 zugewandten Seite des Auflagers 5 entlang der beiden langen Seiten des Hammerkopfelements 6 bis zu einer dem Auflager 5 abgewandten Seite des Hammerkopfelements 6 erstrecken. Die beiden Haltearme 12 halten das Hammerkopfelement 6 drehfest am Auflager 5. Der Halter 7 bildet somit, wie insbesondere in Figur 2 gut zu erkennen, eine Art Käfig für das Hammerkopfelement 6.

An dem Auflager 5 zugewandten Enden sind die Haltearme 12 des Halters 7 nach außen zu Füßen 13 abgewinkelt, die in zusammengebautem Zustand an der dem Hammerkopfelement 6 zugewandten Seite des Auflagers 5 anliegen und mit Kopfzapfen 14 in Befestigungslöchern 15 des Auflagers 5 festgelegt sind.

An dem Auflager 5 fernen Enden sind die Haltearme 12 des Halters 7 durch ein plattenförmiges, längliches Widerlager 16 verbunden, das - im Ausführungsbeispiel - axial zum Befestigungsgewinde 9 gesehen etwa die Form des Hammerkopfelements 6 und ein Mittelloch 17 gleichachsig zum Befestigungsgewinde 9 aufweist. Ein Durchmesser des Mittellochs 17 ist mindestens so groß wie der Gewindeaußendurchmesser des Befestigungsgewindes 9, so dass die Gewindestange 4 oder ein anderes Schraubelement auch durch das Mittelloch 17 des Widerlagers 16 durchführbar ist und beim Durchschrauben durch das Befestigungsgewinde 9 des Hammerkopfelements 6 nicht gegen das Widerlager 16 stößt. Das Widerlager 16 begrenzt einen maximalen Abstand des Hammerkopfelements 6 von dem Auflager 5. Anders formuliert kann das Hammerkopfelement 6 in Richtung der Achse 10 derart weit im Halter 7 verschoben werden, bis es entweder in Anlage mit dem Auflager 5 oder dem Widerlager 16 ist. Die Haltearme 12 bilden eine Art Gleitführung für das Hammerkopfelement 6.

In Bezug zu der Achse 10 des Befestigungsgewindes 9 des Hammerkopfelements 6 um 90° in einer Umfangsrichtung zu den Haltearmen 12 des Halters 7 versetzt stehen zwei - im Ausführungsbeispiel - streifenförmige Federarme 18 von dem Widerlager 16 des Halters 7 in Richtung des Auflagers 5 ab. Die Federarme 18 federn in radialer Richtung zu der Achse 10 des Befestigungsgewindes 9 und enden in einem Abstand von dem Auflager 5, der etwa so groß oder größer als eine Höhe des Hammerkopfelements 6 in axialer Richtung ist.

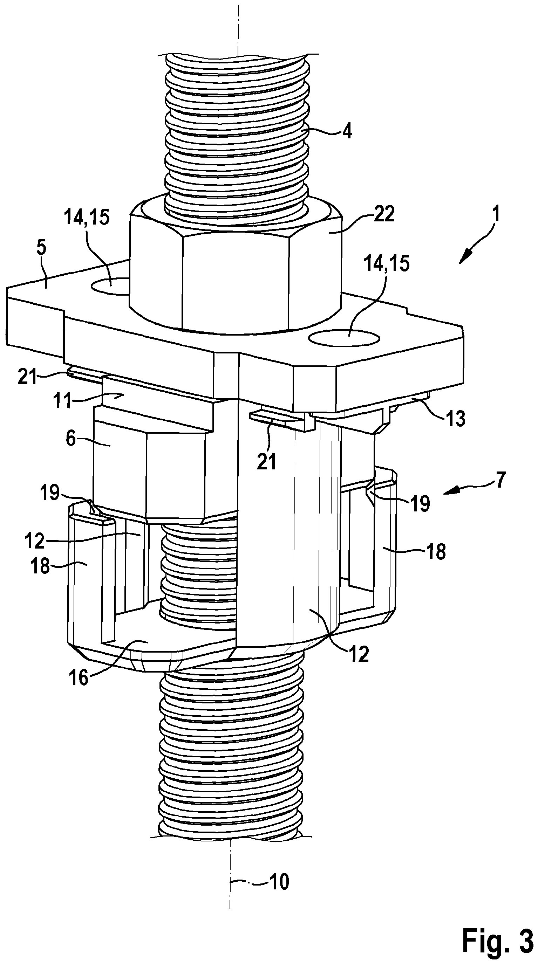

Die Federarme 18 weisen nach innen, das heißt in Richtung der Achse 10 des Befestigungsgewindes 9 abstehende Rastnasen 19 auf, die auch als Schnappnasen aufgefasst werden können. Die Rastnasen 19 beziehungsweise die Federarme 18 definieren zwei Raststellungen des Hammerkopfelements 6: in einer ersten, in Figur 3 gezeigten Raststellung liegt das Hammerkopfelement 6 auf den Rastnasen 19 beziehungsweise auf Enden der Federarme 18 auf und befindet sich dadurch nahe an dem Auflager 5. In einer zweiten, in Figur 2 gezeigten Raststellung befindet sich das Hammerkopfelement 6 zwischen dem Widerlager 16 und den Rastnasen 19 und wird von den Rastnasen 19 in einer dem Auflager 5 fernen Stellung gehalten und gegen Herausfallen gesichert.

Das Hammerkopfelement 6 ist zwischen den Haltearmen 12 und den Federarmen 18 des Halters 7 axial zu seinem Befestigungsgewinde 9 beweglich geführt.

Im dargestellten und beschriebenen Ausführungsbeispiel der Erfindung sind die Haltearme 12, das Widerlager 16 und die Federarme 18 einstückige Bestandteile des Halters 7, was allerdings nicht zwingend für die Erfindung ist.

Die in Figur 4 zu sehende Montageschiene 2 ist im Ausführungsbeispiel ein Rohr mit quadratischem oder rechteckigem Querschnitt und Öffnungen 20 zum Einbringen des Hammerkopfelements 6 des Befestigers 1 in seinen vier Seiten. Im Ausführungsbeispiel sind die Öffnungen 20 rechteckig mit Ausbuchtungen in Mitten ihrer langen Seiten. Die Öffnungen 20 sind etwas länger und etwas breiter als das Hammerkopfelement 6 und so lang und breit, dass das Hammerkopfelement 6 und die Haltearme 12 und die Federarme 18 des Halters 7, zwischen denen sich das Hammerkopfelement 6 befindet, durch eine der Öffnungen 20 in die Montageschiene 2 einbringbar sind. Das Hammerkopfelement 6 ist länger als die Öffnungen 20 breit sind. Anstelle der rechteckigen Öffnungen 20 kann die Montageschiene 2 beispielsweise auch Langlöcher oder in einer Seite einen in ihrer Längsrichtung durchgehenden Längsschlitz als Öffnung/en aufweisen (nicht dargestellt).

Beim Einbringen in die Montageschiene 2 befindet sich das Hammerkopfelement 6 in der zweiten Raststellung, das heißt in der dem Auflager 5 fernen Stellung, die Figur 2 zeigt. In der zweiten Raststellung ist der Abstand des Hammerkopfelements 6 vom Auflager 5 so groß, dass sich das Hammerkopfelement 6 gemeinsam mit dem Halter 7 in der Montageschiene 2 um 90° oder auch einen anderen Winkel drehen lässt, so dass es die Montageschiene 2 von innen hintergreift und nicht axial zum Befestigungsgewinde 9 aus der Montageschiene 2 herausgezogen werden kann.

Zum Einbringen des Hammerkopfelements 6 in die Montageschiene 2 wird der Befestiger 1 an seinem Auflager 5 gehalten und es werden das Hammerkopfelement 6 und der Halter 7 so weit in die Montageschiene eingebracht, bis das Auflager 5 außen an der Montageschiene 2 anliegt. An dem dem Auflager 5 abgewandten Seiten weisen die Füße 13 der Haltearme 12 des Halters 7 Rasthaken als Hintergriffelemente 21 auf, die an Rändern der Öffnung 20 einrasten, so dass der Befestiger 1 an der Montageschiene 2 festgelegt ist.

Es lässt sich jetzt die Gewindestange 4 oder ein anderes Schraubelement durch das Durchgangsloch 8 des Auflagers 5 und durch die Öffnung 20 der Montageschiene 2 durchführen und in das Befestigungsgewinde 9 des Hammerkopfelements 6 schrauben.

Durch Zug in axialer Richtung an der Gewindestange 4 lässt sich das Hammerkopfelement 6 aus der zweiten, dem Auflager 5 fernen Raststellung in die erste, dem Auflager 5 nahe Raststellung überführen, in der das Hammerkopfelement 6 dem Auflager 5 so nahe ist, dass die beiden Parallelflächen 11 auf der dem Auflager 5 zugewandten Seite des Hammerkopfelements 6 in die Öffnung 20 der Montageschiene 2 greifen. Dadurch ist das Hammerkopfelement 6 formschlüssig drehfest oder um einen allenfalls kleinen Winkel drehbar an der Montageschiene 2 festgelegt.

Durch Festziehen einer auf die Gewindestange 4 geschraubten Mutter 22 wird das Auflager 5 von außen und das Hammerkopfelement 6 von innen gegen die Montageschiene 2 gespannt und der Befestiger 1 an der Montageschiene 2 festgelegt. An der Gewindestange 4 kann beispielsweise eine Rohrschelle 3 oder ein anderer Gegenstand befestigt werden. Möglich ist die Befestigung auch, wenn die Rohrschelle 3 oder der andere Gegenstand einen nicht dargestellten Gewindeschaft anstelle der Gewindestange 4 aufweist, der anstelle der Gewindestange 4 durch das Durchgangsloch 8 im Auflager 5 und die Öffnung 20 der Montageschiene 2 durchgeführt und in das Befestigungsgewinde 9 des Hammerkopfelements 6 des Befestigers 1 geschraubt wird.

### Bezugszeichenliste

### Befestiger für eine Schraubbefestigung an einer Montageschiene und Befestigungsanordnung mit einem solchen Befestiger

1 Befestiger
2 Montageschiene
3 Rohrschelle
4 Gewindestange
5 Auflager
6 Hammerkopfelement
7 Halter
8 Durchgangsloch
9 Befestigungsgewinde
10 Achse
11 Parallelflächen
12 Haltearm
13 Fuß
14 Kopfzapfen
15 Befestigungsloch
16 Widerlager
17 Mittelloch
18 Federarm
19 Rastnase
20 Öffnung
21 Hintergriffelement
22 Mutter

## Patentansprüche

1. Befestiger für eine Schraubbefestigung an einer Montageschiene (2), wobei der Befestiger (1) ein Auflager (5) aufweist, das zu einer Anlage außen an der Montageschiene (2) vorgesehen ist, das ein Durchgangsloch (8) für eine Gewindestange (4) aufweist, die mit dem Befestiger (1) an der Montageschiene (2) anordenbar ist, wobei der Befestiger (1) ein Hammerkopfelement (6) aufweist, das zu einer Anlage innen an der Montageschiene (2) vorgesehen ist, das ein mit dem Durchgangsloch (8) des Auflagers (5) gleichachsiges Befestigungsgewinde (9) aufweist, dessen Gewindeaußendurchmesser nicht größer als ein Durchmesser des Durchgangslochs (8) des Auflagers (5) ist, und wobei der Befestiger (1) einen Halter (7) für das Hammerkopfelement (6) aufweist, der das Hammerkopfelement (6) abstandsveränderlich zum Auflager (5) und mit dem Befestigungsgewinde (9) gleichachsig zu dem Durchgangsloch (8) des Auflagers (5) mit dem Auflager (5) verbindet, **dadurch gekennzeichnet, dass** der Halter (7) das Hammerkopfelement (6) in einer ersten Raststellung in einer dem Auflager (5) nahen Stellung und in einer zweiten Raststellung in einer dem Auflager (5) fernen Stellung hält, wobei das Hammerkopfelement (6) von der zweiten in der erste Raststellung überführbar ist.

2. Befestiger nach Anspruch 1, **dadurch gekennzeichnet, dass** der Halter (7) das Hammerkopfelement (6) drehfest zu dem Auflager (5) hält.

3. Befestiger nach Anspruch 1 oder 2, **dadurch gekennzeichnet, dass** der Halter (7) einen Haltearm (12) auf einer Seite des Hammerkopfelements (6) aufweist, der an dem Auflager (5) festgelegt ist, der das Hammerkopfelement (6) gegen ein Verdrehen bezüglich dem Auflager (5) sichert und der auf einer dem Auflager (5) abgewandten Seite des Hammerkopfelements (6) ein Widerlager (16) aufweist, das einen maximalen Abstand des Hammerkopfelements (6) von dem Auflager (5) festlegt.

4. Befestiger nach Anspruch 3, **dadurch gekennzeichnet, dass** der Halter (7) zwei Haltearme (12) beiderseits des Hammerkopfelements (6) aufweist, die an dem Auflager (5) festgelegt sind, die das Hammerkopfelement (6) drehfest zwischen sich halten und die auf einer dem Auflager (5) abgewandten Seite des Hammerkopfelements (6) durch das Widerlager (16) verbunden sind.

5. Befestiger nach Anspruch 3 oder 4, **dadurch gekennzeichnet, dass** das Widerlager (16) des Halters (7) Federarme (18) aufweist, die sich von dem Widerlager (16) in Richtung des Auflagers (5) erstrecken und an oder auf denen das Hammerkopfelement (6) in der ersten Raststellung aufliegt.

6. Befestiger nach Anspruch 5, **dadurch gekennzeichnet, dass** die Federarme (18) in Bezug auf die Achse (10) des Befestigungsgewindes (9) des Hammerkopfelements (6) um 90° versetzt zu den Halterarmen (12) sind.

7. Befestiger nach einem oder mehreren der vorhergehenden Ansprüche, **dadurch gekennzeichnet, dass** das Befestigungsgewinde (9) des Hammerkopfelements (6) ein Innengewinde ist.

8. Befestigungsanordnung mit einem Befestiger (1) nach einem oder mehreren der vorhergehenden Ansprüche und mit einer Montageschiene (2), **dadurch gekennzeichnet, dass** die Montageschiene (2) eine Öffnung (20) zum Einbringen des Hammerkopfelements (6) des Befestigers (1) in die Montageschiene (2) aufweist, die mindestens so breit wie das Hammerkopfelement (6) breit und die schmaler als das Hammerkopfelement (6) lang ist.

9. Befestigungsanordnung nach Anspruch 8, **dadurch gekennzeichnet, dass** in der ersten Raststellung das Hammerkopfelement (6) innen an der Montageschiene (2) anliegt, wenn das Auflager (5) außen an der Montageschiene (2) anliegt.

10. Befestigungsanordnung nach Anspruch 8 oder 9, **dadurch gekennzeichnet, dass** der Befestiger (1) ein Hintergriffelement (21) aufweist, das in Hintergriff an der Öffnung (20) der Montageschiene (2) bringbar ist und das den Befestiger (1) mit dem Auflager (5) in Anlage außen an der Montageschiene (2) hält.

11. Befestigungsanordnung nach einem oder mehreren der Ansprüche 8 bis 10, **dadurch gekennzeichnet, dass** das Hammerkopfelement (6) eine Tangentialfläche in einer Tangentialebene zu der Achse (10) des Befestigungsgewindes (9) oder zwei einander abgewandte Parallelflächen (11) in zwei zueinander parallelen Tangentialebenen zu der Achse (10) des Befestigungsgewindes (9) auf einer dem Auflager (5) zugewandten Seite in einem gleichen radialen Abstand von der Achse (10) des Befestigungsgewindes (9) aufweist, deren radialer Abstand von der Achse (10) des Befestigungsgewindes (9) nicht größer als die Hälfte der Breite der Öffnung (20) der Montageschiene (2) ist.

## Claims

1. A fastener for screw fastening to a mounting rail (2), wherein the fastener (1) has a support (5) that is provided for contact on the outside of the mounting rail (2) and has a through-hole (8) for a threaded rod (4) that can be arranged with the fastener (1) on the mounting rail (2), wherein the fastener (1) has a hammerhead element (6) that is provided for contact on the inside of the mounting rail (2), which hammerhead element has a fastening thread (9) that is coaxial with the through-hole (8) of the support (5) and the outer thread diameter of which is not greater than a diameter of the through-hole (8) of the support (5), and wherein the fastener (1) has a holder (7) for the hammerhead element (6) that connects the hammerhead element (6) to the support (5) such that its distance can be varied with respect to the support and that connects the hammerhead element to the support (5) coaxially with the fastening thread (9) with respect to the through-hole (8) of the support (5), **characterized in that** the holder (7) holds the hammerhead element (6) in a first latching position in a position close to the support (5) and in a second latching position in a position remote from the support (5), wherein the hammerhead element (6) is transferable from the second to the first latching position.

2. The fastener according to claim 1, **characterized in that** the holder (7) holds the hammerhead element (6) in a rotationally fixed manner relative to the support (5).

3. The fastener according to either claim 1 or 2, **characterized in that** the holder (7) has a retaining arm (12) on one side of the hammerhead element (6), which is fixed to the support (5) and secures the hammerhead element (6) against rotation with respect to the support (5) and which has an abutment (16) on a side of the hammerhead element (6) facing away from the support (5), which abutment defines a maximum distance between the hammerhead element (6) and the support (5).

4. The fastener according to claim 3, **characterized in that** the holder (7) has two retaining arms (12) on both sides of the hammerhead element (6), which are fixed to the support (5) and hold the hammerhead element (6) in a rotationally fixed manner therebetween and which are connected by the abutment (16) on a side of the hammerhead element (6) facing away from the support (5).

5. The fastener according to either claim 3 or 4, **characterized in that** the abutment (16) of the holder (7) has spring arms (18) that extend from the abutment (16) in the direction of the support (5) and against or on which the hammerhead element (6) rests in the first latching position.

6. The fastener according to claim 5, **characterized in that** the spring arms (18) are offset by 90° relative to the retaining arms (12) with respect to the axis (10) of the fastening thread (9) of the hammerhead element (6).

7. The fastener according to one or more of the preceding claims, **characterized in that** the fastening thread (9) of the hammerhead element (6) is an internal thread.

8. A fastening arrangement having a fastener (1) according to one or more of the preceding claims and having a mounting rail (2), **characterized in that** the mounting rail (2) has an opening (20) for inserting the hammerhead element (6) of the fastener (1) into the mounting rail (2), which opening is at least as wide as the hammerhead element (6) and is narrower than the hammerhead element (6) is long.

9. The fastening arrangement according to claim 8, **characterized in that,** in the first latching position, the hammerhead element (6) rests against the inside of the mounting rail (2) when the support (5) rests against the outside of the mounting rail (2).

10. The fastening arrangement according to either claim 8 or 9, **characterized in that** the fastener (1) has a rear engagement element (21) that can be brought into engagement behind the opening (20) of the mounting rail (2) and holds the fastener (1) in contact with the support (5) on the outside of the mounting rail (2).

11. The fastening arrangement according to one or more of claims 8 to 10, **characterized in that** the hammerhead element (6) has a tangential surface in a tangential plane to the axis (10) of the fastening thread (9) or two parallel surfaces (11) facing away from one another in two parallel tangential planes to the axis (10) of the fastening thread (9) on a side facing the support (5) at an equal radial distance from the axis (10) of the fastening thread (9), whose radial distance from the axis (10) of the fastening thread (9) is not greater than half the width of the opening (20) of the mounting rail (2).

## Revendications

1. Dispositif de fixation pour une fixation par vis à un rail de montage (2), dans lequel le dispositif de fixation (1) présente un organe d'appui (5) qui est prévu pour un appui à l'extérieur du rail de montage (2), qui présente un trou de passage (8) pour une tige filetée (4) qui peut être disposée avec le dispositif de fixation (1) sur le rail de montage (2), dans lequel le dispositif de fixation (1) comprend un élément formant tête de marteau (6) qui est prévu pour un appui à l'intérieur du rail de montage (2), qui présente un filetage de fixation (9) coaxial avec le trou de passage (8) de l'organe d'appui (5), le diamètre extérieur de filetage dudit filetage de fixation n'étant pas supérieur à un diamètre du trou de passage (8) de l'organe d'appui (5), et dans lequel le dispositif de fixation (1) présente un support (7) pour l'élément formant tête de marteau (6), lequel support relie l'élément formant tête de marteau (6) à l'organe d'appui (5) en modifiant la distance par rapport à l'organe d'appui (5) et au moyen du filetage de fixation (9) coaxial au trou de passage (8) de l'organe d'appui (5), **caractérisé en ce que** le support (7) maintient l'élément formant tête de marteau (6) dans une première position d'encliquetage dans une position proche de l'organe d'appui (5) et dans une seconde position d'encliquetage dans une position éloignée de l'organe d'appui (5), dans lequel l'élément formant tête de marteau (6) peut être amené de la seconde à la première position d'encliquetage.

2. Dispositif de fixation selon la revendication 1, **caractérisé en ce que** le support (7) maintient l'élément formant tête de marteau (6) solidairement en rotation par rapport à l'organe d'appui (5).

3. Dispositif de fixation selon la revendication 1 ou 2, **caractérisé en ce que** le support (7) présente un bras de retenue (12) sur un côté de l'élément formant tête de marteau (6), lequel bras de retenue est fixé à l'organe d'appui (5), empêche l'élément formant tête de marteau (6) de tourner par rapport à l'organe d'appui (5) et présente, sur un côté de l'élément formant tête de marteau (6) opposé à l'organe d'appui (5), une butée (16) qui établit une distance maximale entre l'élément formant tête de marteau (6) et l'organe d'appui (5).

4. Dispositif de fixation selon la revendication 3, **caractérisé en ce que** le support (7) présente deux bras de retenue (12) de part et d'autre de l'élément formant tête de marteau (6), lesquels bras de retenue sont fixés à l'organe d'appui (5), maintiennent entre eux l'élément formant tête de marteau (6) solidairement en rotation, et sont reliés par la butée (16) sur un côté de l'élément formant tête de marteau (6) opposé à l'organe d'appui (5).

5. Dispositif de fixation selon la revendication 3 ou 4,
**caractérisé en ce que** la butée (16) du support (7) présente des bras élastiques (18) qui s'étendent depuis la butée (16) en direction de l'organe d'appui (5) et sur lesquels ou contre lesquels l'élément formant tête de marteau (6) repose dans la première position d'encliquetage.

6. Dispositif de fixation selon la revendication 5, **caractérisé en ce que** les bras élastiques (18) sont décalés de 90° par rapport aux bras de retenue (12) par rapport à l'axe (10) du filetage de fixation (9) de l'élément formant tête de marteau (6).

7. Dispositif de fixation selon l'une ou plusieurs des revendications précédentes, **caractérisé en ce que** le filetage de fixation (9) de l'élément formant tête de marteau (6) est un filetage intérieur.

8. Agencement de fixation comportant un dispositif de fixation (1) selon l'une ou plusieurs des revendications précédentes et un rail de montage (2), **caractérisé en ce que** le rail de montage (2) présente une ouverture (20) pour l'insertion de l'élément formant tête de marteau (6) du dispositif de fixation (1) dans le rail de montage (2), laquelle ouverture est au moins aussi large que l'élément formant tête de marteau (6) est large et est plus étroite que l'élément formant tête de marteau (6) est long.

9. Agencement de fixation selon la revendication 8, **caractérisé en ce que,** dans la première position d'encliquetage, l'élément formant tête de marteau (6) est en appui à l'intérieur contre le rail de montage (2) lorsque l'organe d'appui (5) est en appui à l'extérieur contre le rail de montage (2).

10. Agencement de fixation selon la revendication 8 ou 9,
**caractérisé en ce que** le dispositif de fixation (1) présente un élément de prise arrière (21) qui peut être amené en prise arrière avec l'ouverture (20) du rail de montage (2) et qui maintient le dispositif de fixation (1) avec l'organe d'appui (5) en appui à l'extérieur du rail de montage (2).

11. Agencement de fixation selon l'une ou plusieurs des revendications 8 à 10, **caractérisé en ce que** l'élément formant tête de marteau (6) présente une surface tangentielle dans un plan tangentiel par rapport à l'axe (10) du filetage de fixation (9) ou deux surfaces parallèles (11) opposées l'une à l'autre dans deux plans tangentiels parallèles entre eux par rapport à l'axe (10) du filetage de fixation (9) sur un côté tourné vers l'organe d'appui (5) à une même distance radiale de l'axe (10) du filetage de fixation (9), la distance radiale desdites surfaces parallèles par rapport à l'axe (10) du filetage de fixation (9) n'étant pas supérieure à la moitié de la largeur de l'ouverture (20) du rail de montage (2).
